# EUROPÄISCHE PATENTSCHRIFT

(11) **EP 1 129 502 B1**
(45) Veröffentlichungstag und Bekanntmachung des Hinweises auf die Patenterteilung: **19.03.2003**
(21) Anmeldenummer: 99955736.6
(22) Anmeldetag: 17.09.1999
(51) Int. Cl.: H01M 8/10, H01M 8/04

(54) **REAKTIONSWASSERAUSBRINGUNG BEI PEM-BRENNSTOFFZELLEN**
WITHDRAWAL OF REACTION WATER IN POLYMER ELECTROLYTE MEMBRANE FUEL CELLS
RETRAIT DE L'EAU DE REACTION DANS DES PILES A COMBUSTIBLE A MEMBRANE ELECTROLYTIQUE POLYMERE

(30) Priorität: 30.09.1998 DE 19844983
(43) Veröffentlichungstag der Anmeldung: 05.09.2001
(73) Patentinhaber: SIEMENS AKTIENGESELLSCHAFT, 80333 München (DE)
(72) Erfinder: GEBHARDT, Ulrich, D-91094 Langensendelbach (DE); WAIDHAS, Manfred, D-90427 Nürnberg (DE); LIPINSKI, Matthias, D-91052 Erlangen (DE); LEUSCHNER, Rainer, D-91091 Grossenseebach (DE)
(86) Internationale Anmeldenummer: DE9902987
(87) Internationale Veröffentlichungsnummer: WO00019556

(56) Entgegenhaltungen:
- EP-A- 0 569 062
- EP-A- 0 867 963
- EP-A- 0 917 226
- WO-A-96/31913
- WO-A-98/39809
- US-A- 5 350 643

## Beschreibung

Die Erfindung bezieht sich auf ein Verfahren zur Reaktionswasserausbringung bei PEM-Brennstoffzellen, gemäß dem Oberbegriff des Patentanspruches 1. Daneben bezieht sich die Erfindung auch auf eine zugehörige PEM-Brennstoffzelle gemäß Patentanspruch 2.

Beim Betrieb von Brennstoffzellen entsteht - bei der elektrochemischen Umsetzung von Wasserstoff (H₂) mit Sauerstoff (O₂) - Wasser (H₂O). Bei sogenannten PEM-Brennstoffzellen (PEM = Polymer-Elektrolyt-Membran), bei denen eine Kationenaustauschermembran als Elektrolyt dient, diffundieren die an der Anode - durch Oxidation des Wasserstoffs - entstehenden Protonen (H⁺) durch die Membran und bilden an der Kathode mit den dort entstehenden O²⁻-Ionen Wasser. Dieses Reaktionswasser muß aus der Brennstoffzelle entfernt werden, um den Wasserhaushalt nicht zu beeinflussen und konstant zu halten.

Zur Ausbringung des Reaktionswassers aus PEM-Brennstoffzellen sind verschiedene Möglichkeiten bekannt:
- Ausbringen auf der Kathodenseite in flüssiger Form: Die Reaktionsgase werden bei Betriebstemperatur, beispielsweise ca. 60 bis 80°C, vollständig entsprechend der Sättigungskonzentration befeuchtet. Das Reaktionswasser fällt dann in flüssiger Form an und wird im Transportgas mit einem Gasüberschuß aus dem Kathoden-Gasraum abgeführt (sh. bspw.: Proceedings of the 26^{th} Intersoc. Energy Conversion Eng. Conf., Boston MA, 4. bis 9. August 1991, Vol. 3, Seiten 630 bis 635; dieser Druckschrift ist auch der prinzipielle Aufbau einer PEM-Brennstoffzelle zu entnehmen). Bei Luftbetrieb kann das Transportgas der Inertgasanteil Stickstoff (N₂) sein. Ein Nachteil dieser Methode besteht darin, daß die Befeuchtung der Reaktionsgase relativ aufwendig ist.
- Ausbringen auf der Kathodenseite in teilweise bzw. vollständig dampfförmiger Form: Die Reaktionsgase werden nicht oder nur zum Teil befeuchtet, so daß das Reaktionswasser zumindest teilweise dampfförmig ausgebracht werden kann (sh. bspw.: EP 0 567 499 B1). Ein derartiges Betriebskonzept stellt bestimmte Anforderungen an die Elektrolytmembran hinsichtlich mechanischer Stabilität und Leitfähigkeit. Bei Systemen mit höheren Betriebsdrücken ist es möglich, das Reaktionswasser durch Expansionsstufen in die Dampfphase überzuführen und aus der Brennstoffzelle zu entfernen. Eine derartige Vorgehensweise ist aber sehr aufwendig.
- Ausbringen auf der Anodenseite: Die Betriebskonzepte, bei denen das Reaktionswasser anodenseitig ausgebracht wird, arbeiten mit einer Druckdifferenz - der Reaktanten - zwischen Kathode und Anode (siehe beispielsweise: US-PS 5 366 818). Dabei wird das Reaktionswasser mittels eines höheren Gasdruckes auf der Kathodenseite, beispielsweise Luft mit 4 bar gegenüber Wasserstoff mit 2 bar, zur Anodenseite gedrückt und dort mit überschüssigem Wasserstoff aus der Brennstoffzelle entfernt. Die Einstellung eines höheren Druckes (auf der Kathodenseite) ist aber sehr nachteilig,. weil zum Komprimieren Energie erforderlich ist, die von der Brennstoffzelle geliefert werden muß.

Weiterhin ist aus der EP 0 569 062 A1 eine sogenannte MEA (Membrane Electrode Assembly) zur Verwendung bei einer PEM-Brennstoffzelle beschrieben, bei der auf einer Polymer-Elektrolyt-Membran als Elektroden zwei katalytisch aktive, kathoden- und anodenseitige Schichten aufgebracht sind. Diese Schichten bestehen aus feinverteiltem Kohlepulver mit darin enthaltenen Katalysatorpartikeln. Auf der Anodenseite sollen die Partikel eine Porengröße von 9 bis 11 nm aufweisen, während auf der Kathodenseite eine Porengröße von 6 bis 8 nm vorhanden ist. Dabei wird bereits darauf hingewiesen, dass die Schichten unterschiedliche Eigenschaften der Hydrophobie bzw. der Hydrophilie haben.

Aufgabe der Erfindung ist es demgegenüber, die Reaktionswasserausbringung bei PEM-Brennstoffzellen - mit je einer an der Kathode und der Anode angeordneten porösen Schicht - derart zu gestalten, daß keine Befeuchtung der Reaktionsgase erforderlich ist und auch keine höheren Gasdrücke benötigt werden.

Die Aufgabe ist erfindungsgemäß durch die Maßnahme des Patentanspruches 1 gelöst. Eine erfindungsgemäße PEM-Brennstoffzelle ist gemäß Patentanspruch 2 aufgebaut.

Die Erfindung besteht somit in einer Ausbringung des Reaktionswassers auf der Anodenseite mit dem Vorteil, daß eine Gasbefeuchtung unterbleiben kann und kein erhöhter Druck erforderlich ist, und sieht dazu auf der Kathodenseite eine sogenannte Gasleitschicht vor. Diese Gasleitschicht ist gasdurchlässig, für flüssiges Wasser jedoch undurchlässig. Da im Betrieb der Brennstoffzelle - entsprechend der Last - stetig Wasser flüssig gebildet wird, erhöht sich der innere Druck in der Zelle auf der Kathodenseite und das Wasser wird durch die Elektrolytmembran zur Anode - und durch die Anode hindurch - gedrückt, von wo es mit einem überschüssigen Reaktanten-Gasstrom entfernt, d.h. aus der Brennstoffzelle transportiert wird. Eine Befeuchtung des Reaktionsgases auf der Anodenseite muß aber nicht grundsätzlich unterbleiben. Dies ist beispielsweise dann der Fall, wenn das das Wasser abtransportierende Reaktionsgas im Kreislauf geführt wird.

Das Konzept nach der Erfindung bietet folgende Vorteile:
1. Das Kathoden-Gas (Oxidationsmittel), nämlich Luft oder Sauerstoff, muß nicht befeuchtet werden, d.h. es kann der Brennstoffzelle trocken zugeführt werden, ohne daß die Elektrolytmembran ausgetrocknet und geschädigt wird.
2. Das Anoden-Gas, nämlich Wasserstoff, muß ebenfalls nicht befeuchtet werden, da das gesamte Reaktionswasser zur Anode transportiert wird und dort für eine ausreichende Feuchte sorgt. Eine Austrocknung während des Betriebs kann deshalb nicht eintreten.
3. Die sich bei der Regelung des Wasserhaushalts in PEM-Brennstoffzellen auf der Kathodenseite ergebenden Probleme werden bei dem Verfahren nach der Erfindung dadurch gelöst, daß die Wasserausbringung gezielt auf der Anodenseite erfolgt. Dies bedeutet, daß durch Wassertropfen in der porösen Gasleitschicht auf der Kathode keine Inertgaspolster (N₂) gebildet werden können, welche die Diffusion des Sauerstoffs zur Katalysatorschicht hemmen.
4. Die wirksame Druckerhöhung wird durch eine interne Sperrschicht erreicht. Dies bedeutet, daß das System unabhängig von den Reaktionsgasdrücken funktioniert. Es ist kein Differenzdruck notwendig, der extern, beispielsweise über einen Luftverdichter, realisiert werden muß. Eine Vorrichtung zur Durchführung des Verfahrens nach der Erfindung, d.h. eine Brennstoffzelle, weist - neben einer Anode, einer Kathode und einer Elektrolytmembran (zwischen Anode und Kathode) - an der Anode und der Kathode je eine poröse elektronisch leitende Schicht auf, wobei die Schicht auf der Kathodenseite (Gasleitschicht) hydrophob ist und wenigstens an der Oberfläche eine geringere Porengröße aufweist als die Schicht auf der Anodenseite. Auf diese Weise bildet die Gasleitschicht eine Barriere für flüssiges Wasser.

Die Gasleitschicht weist vorzugsweise in der an die Kathode grenzenden Oberfläche eine geringere Porengröße auf als die Schicht auf der Anodenseite. Eine derartige Ausführungsform kann beispielsweise durch eine Gasleitschicht mit asymmetrischer Porenstruktur realisiert werden. Dies hat den Vorteil, daß der Antransport des Reaktionsgases an die Kathode relativ wenig behindert wird, was insbesondere bei Luftbetrieb wichtig ist.

Die Gasleitschicht kann in Form einer einheitlichen Schicht vorliegen, welche die spezifische Porengröße aufweist. Sie kann jedoch auch aus einer Schichtenfolge der Art bestehen, daß zwischen der in Brennstoffzellen üblicherweise vorhandenen elektronisch leitenden Schicht und der Kathode eine dünne Barriereschicht angeordnet wird, d.h. eine Schicht mit der spezifischen Porengröße. Auch ein derartiger Aufbau hat - neben einer einfachen Realisierbarkeit - den Vorteil einer geringen Hemmung des Antransports des Reaktionsgases.

Die Gasleitschicht ist vorzugsweise eine Schicht aus einem Aerogel oder Xerogel aus Kohlenstoff. Derartige Schichten, die elektronisch leitend sind, lassen sich relativ einfach mit der erforderlichen spezifischen Porengröße herstellen, um einen Wasserdurchtritt zu verhindern.

Kohlenstoff-Aerogele bzw. -Xerogele sind an sich bekannt (siehe dazu beispielsweise: DE 195 23 382 A1); sie werden beispielsweise durch Pyrolyse von Aerogelen auf der Basis organischer Verbindungen hergestellt. Als Aerogele bzw. Xerogele werden insbesondere solche auf der Basis von Resorcin und Formaldehyd (als Monomere) eingesetzt. Neben Resorcin (1,3-Dihydroxybenzol) können aber auch andere phenolische Verbindungen verwendet werden, beispielsweise Phenol selbst und die anderen Dihydroxybenzole, d.h. Brenzcatechin und Hydrochinon, sowie Trihydroxybenzole, wie Pyrogallol und Phloroglucin, und ferner Bisphenol-A. Der phenolische Ring kann auch weitere Substituenten aufweisen, beispielsweise Alkylgruppen, substituierte Alkylgruppen, wie -CH₂OH, und Carboxylgruppen, d.h. es können beispielsweise Verbindungen wie Alkylphenole und Dihydroxybenzoesäuren eingesetzt werden. Anstelle der phenolischen Komponente können auch Verbindungen wie Melamin verwendet werden. Ferner kann der Formaldehyd durch andere Aldehyde ersetzt werden, beispielsweise durch Furfural (α-Furfurylaldehyd).

Die Aerogel- bzw. Xerogelschicht weist vorteilhaft ein Stützgerüst auf. Auf diese Weise wird die mechanische Stabilität der relativ dünnen Schicht erhöht. Das Stützgerüst besteht bevorzugt - wenigstens teilweise - aus organischem Material. Dafür kommen insbesondere Cellulose, Polyamide, Polyester und Phenolharze, insbesondere Novolake, in Frage. Das organische Material kann in Form von porösen Membranen sowie flexiblen Faservliesen und Fasergeweben vorliegen. Das Stützgerüst kann aber auch aus anorganischem Material bestehen, insbesondere aus Kohlenstoff-, Aluminiumoxid-, Zirkondioxid- oder Siliziumdioxid-Fasern.

Die Gasleitschicht kann beispielsweise aber auch aus einem Kohlepapier oder Kohlegewebe bestehen, dessen kathodenseitige Oberfläche hydrophob ist, d.h. als Flüssigkeitsbarriere fungiert, und die spezifische Porengröße aufweist. Dazu kann in die Oberfläche beispielsweise ein feines Pulver aus Ruß, der elektronisch leitend ist, und/oder Polytetrafluorethylen (PTFE) eingebracht werden.

Die poröse Schicht auf der Anodenseite kann ein üblicherweise in PEM-Brennstoffzellen eingesetztes Kohlepapier oder Kohlegewebe sein. Diese Schicht, die ebenfalls hydrophob sein kann, weist - ebenso wie die Gasleitschicht - im allgemeinen eine Schichtdicke von 100 bis 300 µm auf. Grundsätzlich sollten diese Schichten so dünn wie möglich sein, wobei aber eine mechanische Handhabbarkeit gewährleistet sein muß.

Anhand von Ausführungsbeispielen soll die Erfindung noch näher erläutert werden.

Zur Herstellung einer Gasleitschicht werden 10 g einer 40 %igen Formaldehydlösung mit 7,3 g Resorcin vermischt, und dazu werden 0,9 g einer 0,1 n Natriumcarbonatlösung sowie 20 g Wasser gegeben. Mit dieser Lösung wird eine Cellulosemembran getränkt, die dann - nach dem Sandwichprinzip - zwischen zwei planparallele Glasplatten gelegt und in einem geschlossenen Behälter etwa 24 h bei Raumtemperatur unter Luftausschluß gelagert wird. Dabei wird an den Glasplatten in geeigneter Weise, beispielsweise mittels Federn, ein Anpreßdruck von ca. 50 bar eingestellt. Nach einer weiteren Lagerung für etwa 24 h bei ca. 50°C geliert die Probe. Die Probe läßt man dann etwa 24 h bei einer Temperatur von ca. 90°C altern, anschließend wird die Porenflüssigkeit, d.h. das Wasser, durch Aceton ersetzt. Dann wird die Probe bei einer Temperatur von ca. 50°C unterkritisch getrocknet, wobei die in den Poren enthaltene Flüssigkeit verdampft; dabei wird ein Xerogel erhalten. Wird die Probe nach der Alterung in einem Autoklaven mit Kohlendioxid überkritisch getrocknet, dann erhält man ein Aerogel. Nachfolgend wird die getrocknete Probe bei ca. 1050°C in einer Argon-Atmosphäre, die 5 % Methan enthält, pyrolysiert (Dauer: etwa 2 h).

Die auf diese Weise hergestellten Proben weisen bereits die erforderlichen hydrophoben Eigenschaften auf. Falls eine zusätzliche Hydrophobierung erwünscht oder erforderlich ist, kann dies beispielsweise mit einer PTFE-Lösung erfolgen, mit der die Proben getränkt werden.

Auf diese Weise werden mechanisch stabile hydrophobe Gasleitschichten in Form eines Kohlenstoff-Aerogel bzw. -Xerogel/Cellulosemembran-Verbundes erhalten. Die Oberfläche dieses Verbundes, dessen Porengröße ≤ 10 µm beträgt (Mindestgröße: ca. 500 nm), ist mit einer etwa 3 bis 4 um dicken glatten Haut überzogen, die eine Porengröße ≤ 30 nm aufweist (Auflösungsgrenze des zur Untersuchung eingesetzten Rasterelektronenmikroskops). Die Dicke des Überzuges, die im allgemeinen 1 bis 5 µm beträgt, läßt sich über den Anpreßdruck beim Gelieren einstellen; dieser Druck liegt etwa zwischen 20 und 100 mbar.

Eine Ausführungsform einer Brennstoffzelle (aktive Elektrodenfläche: 3 cm²) zur Durchführung des Verfahrens nach der Erfindung weist folgenden Aufbau auf. Zwischen einer Anodeneinheit und einer Kathodeneinheit ist eine handelsübliche Nafionmembran angeordnet. Die Anodeneinheit besteht aus einem Kohlepapier, das mit einem Platinkatalysator versehen ist. Die Kathodeneinheit besteht aus einer auf die vorstehend beschriebene Weise hergestellten hydrophoben mikroporösen Aerogel- bzw. Xerogelschicht, auf die ein Platinkatalysator aufgebracht ist.

Diese Brennstoffzelle wurde als H₂/O₂-Zelle mit trockenen Reaktionsgasen bei einer Temperatur von ca. 80°C betrieben. Kathodenseitig wurde die Zelle - entsprechend der Reinheit des verwendeten Sauerstoffes - periodisch gespült. Das Reaktionswasser wurde anodenseitig durch einen Wasserstoffstrom (λ ≥ 2) ausgespült. Unter diesen Bedingungen konnte die Brennstoffzelle störungsfrei mit einer konstanten Last von etwa 400 mA/cm² betrieben werden; die Zellspannung betrug dabei etwa 720 mV.

## Patentansprüche

1. Verfahren zur Reaktionswasserausbringung bei PEM-Brennstoffzellen, die eine zwischen Anode und Kathode befindliche Elektrolytmembran und je eine an der Kathode und der Anode angeordnete poröse Schicht umfassen, wobei die kathodenseitige Schicht eine geringere Porengröße aufweist als die anodenseitige Schicht und hydrophob ist, **dadurch gekennzeichnet, daß** das Reaktionswasser durch die Anode hindurchgedrückt wird und mit einem überschüssigen Reaktanten-Gas aus der Brennstoffzelle ausgebracht wird.

2. PEM-Brennstoffzelle zur Durchführung des Verfahrens nach Anspruch 1 mit einer Anode, einer Kathode, einer Elektrolytmembran zwischen Anode und Kathode sowie je einer an der Anode und der Kathode angeordneten porösen, elektronisch leitenden Schicht, wobei die Schicht auf der Kathodenseite als Gasleitschicht für Gase durchlässig, für flüssiges Wasser jedoch undurchlässig ist und wenigstens an der Oberfläche eine geringere Porengröße aufweist als die Schicht auf der Anodenseite.

3. PEM-Brennstoffzelle nach Anspruch 2, **dadurch gekennzeichnet, daß** die Gasleitschicht auf der Kathodenseite eine asymmetrische Porenstruktur hat und in der an die Kathode grenzenden Oberfläche eine geringere Porengröße aufweist als die Schicht auf der Anodenseite.

4. PEM-Brennstoffzelle nach Anspruch 2 oder 3, **dadurch gekennzeichnet, daß** die Schicht auf der Kathodenseite aus einem Aerogel oder Xerogel aus Kohlenstoff besteht.

5. PEM-Brennstoffzelle nach Anspruch 4, **dadurch gekennzeichnet, daß** die Aerogel- bzw. Xerogelschicht ein Stützgerüst aufweist.

6. PEM-Brennstoffzelle nach einem der Ansprüche 2 bis 5, **dadurch gekennzeichnet, daß** die Schicht auf der Anodenseite aus porösem Kohlepapier besteht.

## Claims

1. Method of discharging reaction water in PEM fuel cells which comprise an electrolyte membrane located between anode and cathode and comprise one porous layer each disposed on the cathode and the anode, the cathode-side layer having a smaller pore size than the anode-side layer and being hydrophobic, **characterized in that** the reaction water is forced through the anode and is discharged from the fuel cell with an excess of reactant gas.

2. PEM fuel cell for implementing the method according to Claim 1, comprising an anode, a cathode, an electrolyte membrane between anode and cathode, and one porous, electron-conducting layer each disposed on the anode and on the cathode, the layer on the cathode side, as a gas conduction layer, being gas-permeable but impermeable to liquid water and having, at least on the surface, a smaller pore size than the layer on the anode side.

3. PEM fuel cell according to Claim 2, **characterized in that** the gas conduction layer on the cathode side has an asymmetrical pore structure and has a smaller pore size, in the surface adjoining the cathode, than the layer on the anode side.

4. PEM fuel cell according to Claim 2 or 3, **characterized in that** the layer on the cathode side consists of an aerogel or xerogel comprising carbon.

5. PEM fuel cell according to Claim 4, **characterized in that** the aerogel layer or xerogel layer includes a matrix.

6. PEM fuel cell according to any one of Claims 2 to 5, **characterized in that** the layer on the anode side consists of porous carbon paper.

## Revendications

1. Procédé de retrait de l'eau de réaction dans des piles à combustible PEM, qui comprennent une membrane d'électrolyte se trouvant entre l'anode et la cathode et respectivement une couche poreuse disposée à la cathode et à l'anode, la couche se trouvant du côté de la cathode ayant une dimension de pores plus petite que la couche se trouvant du côté de l'anode et étant hydrophobe, **caractérisé en ce que** l'on refoule l'eau de réaction dans l'anode et on la rejette de la pile à combustible par un réactif gazeux en excès.

2. Pile à combustible PEM pour la mise en oeuvre du procédé suivant la revendication 1, comprenant une anode, une cathode, une membrane d'électrolyte entre l'anode et la cathode, ainsi qu'une couche conductrice d'électrons et poreuse disposée respectivement à l'anode et à la cathode, la couche étant, du côté de la cathode, perméable aux gaz sous la forme d'une couche de passage de gaz mais imperméable à de l'eau liquide et ayant au moins à la surface une dimension de pores plus petite que la couche se trouvant du côté de l'anode.

3. Pile à combustion PEM suivant la revendication 2, **caractérisée en ce que** la couche de passage de gaz a, du côté de la cathode, une structure de pores dissymétrique et a, à la surface voisine de la cathode, une dimension de pores plus petite que la couche du côté de l'anode.

4. Pile à combustion PEM suivant la revendication 2 ou 3, **caractérisée en ce que** la couche est constituée du côté de la cathode d'un aérogel ou d'un xérogel en carbone.

5. Pile à combustion PEM suivant la revendication 4, **caractérisée en ce que** la couche d'aérogel ou de xérogel a un squelette d'appui.

6. Pile à combustion PEM suivant l'une des revendications 2 à 5, **caractérisée en ce que** la couche du côté de l'anode est en papier carbone poreux.
